# EUROPÄISCHE PATENTSCHRIFT

(11) **EP 3 049 682 B1**
(45) Veröffentlichungstag und Bekanntmachung des Hinweises auf die Patenterteilung: **06.03.2019**
(21) Anmeldenummer: 14802343.5
(22) Anmeldetag: 10.11.2014
(51) Int. Cl.: F16C 32/04

(54) **GETEILTES AXIALMAGNETLAGER ZUR LAGERUNG EINES ROTORS EINER THERMISCHEN STRÖMUNGSMASCHINE**
SPLIT AXIAL MAGNETIC BEARING FOR THE MOUNTING OF A ROTOR OF A THERMAL TURBOMACHINE
PALIER MAGNÉTIQUE AXIAL DE TYPE À FENTE POUR SUPPORTER UN ROTOR D'UNE TURBOMACHINE THERMIQUE

(30) Priorität: 30.12.2013 DE 102013227210
(43) Veröffentlichungstag der Anmeldung: 03.08.2016
(73) Patentinhaber: Siemens Aktiengesellschaft, 80333 München (DE)
(72) Erfinder: HAJE, Detlef, 02828 Görlitz (DE)
(86) Internationale Anmeldenummer: PCT/EP2014/074124
(87) Internationale Veröffentlichungsnummer: WO 2015/101436

(56) Entgegenhaltungen:
- DE-A1-102005 032 673
- JP-A- S6 165 912
- US-A- 4 920 291
- US-A- 5 153 475
- US-A1- 2011 316 376

## Beschreibung

Die vorliegende Erfindung betrifft die Lagerung eines Rotors einer thermischen Strömungsmaschine, beispielsweise die Lagerung eines Turbinenläufers einer Dampfturbine oder einer Gasturbine.

Derzeit werden Turbomaschinen üblicherweise mit Wälz- oder Gleitlagern ausgestattet, um deren Rotoren zu lagern. Nur in Einzelfällen kommen so genannte Magnetlager zum Einsatz, bei denen der Rotor durch ein aktiv geregeltes Magnetfeld getragen bzw. positioniert wird.

Turbomaschinen großer Leistungen werden oft in Teilfugenbauweise hergestellt. Damit wird eine leichte Montage und Demontage gewährleistet. Es sind bereits geteilte Radialmagnetlager bekannt, aus denen der Rotor nach Abnehmen entsprechender Gehäuseoberteile nach oben entnommen werden kann. Damit erlauben diese Radialmagnetlager die Beibehaltung der bewährten Teilfugenbauweise.

Um einen Rotor in allen Freiheitsgraden festzuhalten, werden zumindest zwei Radiallager und ein Axiallager benötigt. Insofern besteht ein Bedürfnis nach geteilt zusammengesetzten Axialmagnetlagern. Eine radiale Teilung ist auf Grund der genannten Montagevereinfachung insbesondere für einen Einsatz in thermischen Strömungsmaschinen wie z. B. Turbomaschinen ein wesentlicher Vorteil.

Dementsprechend geht die vorliegende Erfindung gemäß des Oberbegriffes des Anspruchs 1 aus von einem geteilten Axialmagnetlager zur Lagerung eines Rotors einer thermischen Strömungsmaschine, umfassend
- einen Lagerrotor, enthaltend magnetisches Material, der am Umfang des Rotors angeordnet und mit diesem verbunden ist,
- zwei Lagerstatoren, die den Umfang des Rotors umgeben und in Axialrichtung betrachtet beiderseits des Lagerrotors angeordnet sind und jeweils Magnetfelderzeugungsmittel zur steuerbaren Erzeugung eines durch den Lagerrotor geleiteten Magnetfeldes enthalten,
wobei wenigstens einer der Lagerstatoren entlang einer den Rotor durchsetzenden Teilungsebene geteilt aus zwei Lagerstatorhälften ausgebildet ist.

Aus der US 2011/0316376 ist ein geteiltes Axialmagnetlager mit den Merkmalen des Oberbegriffes des Anspruches 1 zur Lagerung eines Rotors von z. B. einer Turbine bekannt.

Problematisch sind bei diesem Stand der Technik z. B. Wirbelstromverluste im Betrieb des Axialmagnetlagers. Ferner problematisch ist in diesem Zusammenhang die Schwierigkeit einer Erzeugung eines über den Umfang betrachtet möglichst gleichmäßigen Magnetfeldes. Einer solchen Gleichmäßigkeit steht die prinzipiell auf Grund der geteilten Bauweise vorhandene "magnetische Diskontinuität" im Bereich der Teilfuge entgegen.

Aus der US 5,153,475 ist ein ungeteiltes Axialmagnetlager mit einem elektromagnetischen Aktuator zur Erzeugung axialer Kräfte zwischen einem Lagerrotor und einem Lagerstator bekannt. Im Lagerrotor und im Lagerstator ist jeweils magnetisches Material umfassend einen Stapel ferromagnetischer Bleche angeordnet.

Es ist eine Aufgabe der vorliegenden Erfindung, ein geteiltes Axialmagnetlager der oben beschriebenen Art so weiterzubilden, dass damit Wirbelstromverluste verringert werden können.

Das zur Lösung dieser Aufgabe gemäß der Erfindung vorgesehene Axialmagnetlager ist dadurch gekennzeichnet, dass wenigstens einer der Lagerstatoren magnetisches Material enthält, welches in einer wirbelstromreduzierenden Weise angeordnet ist, und dass an einer Teilfuge der beiden Lagerstatorhälften die magnetischen Materialien der beiden Lagerstatorhälften miteinander verzahnend aneinandergefügt sind und/oder die beiden Lagerstatorhälften im Bereich einer Teilfuge der beiden Lagerstatorhälften eine deren Kontaktfläche vergrößernde Verbreiterung besitzen.

Der Begriff "magnetisches Material" soll im Rahmen der Erfindung insbesondere ferromagnetische Materialien umfassen.

Die Anordnung des magnetischen Materials des Lagerstators "in einer wirbelstromreduzierenden Weise" kann gemäß einer Ausführungsform dadurch realisiert sein, dass das magnetische Material ein Sintermaterial umfasst.

Alternativ oder zusätzlich kann die Wirbelstromreduzierung z. B. auch dadurch realisiert sein, dass das magnetische Material ein gestapeltes Blechmaterial umfasst.

Gemäß einer Ausführungsvariante ist vorgesehen, dass das magnetische Material des Lagerstators ein gestapeltes Blechmaterial umfasst. Gemäß einer Weiterbildung verläuft die Stapelrichtung in Umfangsrichtung. Alternativ kann die Stapelrichtung in Radialrichtung verlaufen.

Beiden Anordnungsformen, nämlich "gekörnt" in einem Sintermaterial bzw. "gestapelt", ist gemein, dass den für Wirbelströme zur Verfügung stehenden Strompfaden auf Grund der besonderen Materialanordnung ein erheblich vergrößerter elektrischer Widerstand verliehen wird. Bei Sintermaterial beruht dies auf den Grenzflächenwiderständen zwischen einander benachbarten Materialkörnern. Bei gestapeltem Blechmaterial ergeben sich derartige Kontaktwiderstände an den Grenzflächen zwischen einander benachbarten Materialblechen.

Die Funktion des erfindungsgemäßen Axialmagnetlagers beruht darauf, dass in an sich bekannter Weise mittels der seitens der beiden Lagerstatoren durchgeführten gesteuerten Erzeugung eines (auch) durch den Lagerrotor geleiteten Magnetfeldes der Lagerrotor in Axialrichtung in geregelter Weise positionierbar ist, indem die in Axialrichtung wirkenden magnetischen Anziehungskräfte zwischen dem Lagerrotor einerseits und den beiden Lagerstatoren andererseits entsprechend eingestellt (geregelt) werden.

Die erfindungsgemäß vorgesehene geteilte Bauweise wenigstens eines, bevorzugt beider Lagerstatoren bedingt in der Praxis ein über den Umfang des bzw. der Lagerstatoren mehr oder weniger uneinheitliches Magnetfeld. Dies deshalb, weil sich im Bereich von Teilfugen zwischen aneinandergefügten Lagerstatorhälften eine gewisse Diskontinuität ergibt.

Wenn der Lagerrotor in einem derart uneinheitlichen Magnetfeld rotiert, so bedingt dies wiederum die Erzeugung von Wirbelströmen im magnetischen Material des Lagerrotors.

Für die Erfindung wesentlich ist wie bereits erwähnt jedoch, dass an einer Teilfuge der beiden Lagerstatorhälften die magnetischen Materialien der beiden Lagerstatorhälften miteinander verzahnend aneinandergefügt sind und/oder die beiden Lagerstatorhälften im Bereich einer Teilfuge der beiden Lagerstatorhälften eine deren Kontaktfläche (in radialer und/oder axialer Richtung) vergrößernde Verbreiterung besitzen.

Sowohl eine Verzahnung als auch eine verbreiterte Kontaktfläche an einer Teilfuge verringern vorteilhaft die Auswirkung der "magnetischen Diskontinuität" im Bereich der betreffenden Fuge, was wiederum vorteilhaft Wirbelstromverluste reduziert.

Gemäß einer Weiterbildung wird die Wirbelstromerzeugung im magnetischen Material des Lagerrotors durch eine wirbelstromreduzierende Anordnungsweise des magnetischen Materials des Lagerrotors reduziert, so dass das derart weitergebildete Axialmagnetlager im Betrieb vorteilhaft relativ wenig Wirbelstromverluste mit sich bringt.

Die Erfindung eignet sich insbesondere zur Axiallagerung eines Turbinenläufers in einer Dampfturbine oder einer Gasturbine.

Das magnetische Material des Lagerrotors enthält bevorzugt Eisen oder eine Eisenlegierung.

Der Lagerrotor ist bevorzugt als separat (vom Rotor der betreffenden Strömungsmaschine) ausgebildetes, am Rotor zu befestigendes Bauteil ausgebildet. Denkbar wäre, dass der Lagerrotor ebenfalls in geteilter Bauweise ausgebildet ist. Beispielsweise kann der Lagerrotor entlang derjenigen den Rotor durchsetzenden Teilungsebene geteilt aus zwei Lagerrotorhälften ausgebildet sein, welche auch als Teilungsebene für den oder die Lagerstatoren vorgesehen ist.

Die Teilungsebene des oder der Lagerstatoren verläuft bevorzugt durch die Drehachse des betreffenden Rotors, und hierbei insbesondere z. B. in einer horizontalen Ebene.

Die Magnetfelderzeugungsmittel der Lagerstatoren weisen bevorzugt Magnetspulen auf. In einer bevorzugten Ausführungsform weist jeder Lagerstator ein Paar von jeweils in Umfangsrichtung verlaufenden Magnetspulen auf, die unterschiedliche Durchmesser besitzen und im Betrieb des Axialmagnetlagers mit einander entgegengesetzten Stromrichtungen bestromt werden. Bei geteilter Bauweise des betreffenden Lagerstators kann z. B. eine elektrische Kontaktierung im Bereich der Fügeflächen vorgesehen sein, mittels welcher die jeweiligen beiden "Magnetspulenhälften" zu der jeweiligen Magnetspule zusammengestzt werden. Dies ist denkbar in Form einer geteilten Wicklung, deren Windungen durch Steckkontakte verbunden werden. Die Steckkontakte können hierbei auch außerhalb der eigentlichen Wicklungsposition gelegen sein; eine lokale Herausführung der Leiter in der Nähe der Teilungsebene sollte so erfolgen, dass der in der "Stator-Polanordnung" erzeugte Fluss möglichst wenig beeinflusst wird, oder dass der Einfluss der Herausführung kompensiert wird. Denkbar ist auch eine kontaktfreie Ausführung (z. B. für hohe erforderliche Wicklungsströme), bei der die beiden Wicklungshälften elektromagnetisch verbunden werden (wie bei einem Transformator, bevorzugt mit Übertragungsfaktor von wenigstens annähernd 1).

Zur Bedeutung der Begriffe "magnetisches Material" und "wirbelstromreduzierende Weise der Anordnung" mit Bezug auf den Lagerrotor sei auf die oben mit Bezug auf das magnetische Material des Lagerstators gegebenen Erläuterungen und Gestaltungsmöglichkeiten verwiesen.

Eine besondere Vorteilhaftigkeit einer Kombination der erfindungsgemäß wirbelstromreduzierenden Anordnungsweise des magnetischen Materials wenigstens eines der Lagerstatoren mit einer wirbelstromreduzierenden Anordnungsweise des Materials des Lagerrotors(Anspruch 5) ergibt sich daraus, dass auf Grund einer gewissen magnetischen Rückwirkung des Lagerrotors auf den Lagerstator auch Wirbelströme im Lagerstator erzeugt werden können. Durch die wirbelstromreduzierende Gestaltung des Lagerrotors werden somit vorteilhaft Wirbelstromverluste im Bereich des oder der Lagerstatoren noch weiter verringert.

Da die wirbelstromreduzierende Anordnungsweise eines magnetischen Materials des Lagerstators unabhängig von der entsprechenden Materialanordnungsweise beim Lagerrotor zur Verringerung von Wirbelstromverlusten des geteilten Axialmagnetlagers beiträgt, ist die Erfindung jedoch auch dann von Vorteil, wenn das magnetische Material des Lagerrotors nicht in einer wirbelstromreduzierenden Weise angeordnet ist.

Gemäß eines noch weiteren Aspekts der Erfindung ist eine thermische Strömungsmaschine, insbesondere Expansionsturbine vorgesehen, die ein Gehäuse und einen darin gelagerten Rotor umfasst, wobei für die Drehlagerung des Rotors wenigstens ein geteiltes Axialmagnetlager der hier beschriebenen Art vorgesehen ist.

Die Erfindung wird nachfolgend anhand von Ausführungsbeispielen mit Bezug auf die beigefügten Zeichnungen weiter beschrieben. Es stellen dar:
- Fig. 1: eine teilweise geschnittene Seitenansicht eines Axialmagnetlagers gemäß eines Ausführungsbeispiels,
- Fig. 2: eine Schnittansicht eines Lagerrotors eines Axialmagnetlagers gemäß eines weiteren Ausführungsbeispiels,
- Fig. 3: eine Schnittansicht eines Lagerrotors eines Axialmagnetlagers gemäß eines weiteren Ausführungsbeispiels,
- Fig. 4: eine Schnittansicht eines Lagerrotors eines Axialmagnetlagers gemäß eines weiteren Ausführungsbeispiels,
- Fig. 5: eine Seitenansicht eines Axialmagnetlagers gemäß eines weiteren Ausführungsbeispiels,
- Fig. 6: eine schematische teilweise Stirnansicht eines bei dem Beispiel von Fig. 5 verwendeten Lagerstators,
- Fig. 7: eine schematische Stirnansicht eines Lagerstators mit einer Veranschaulichung von zwei Anordnungsvarianten von darin enthaltenem Blechmaterial,
- Fig. 8: eine Schnittansicht längs der Linie VIII-VIII in Fig. 7,
- Fig. 9: eine Schnittansicht längs der Linie IX-IX in Fig. 7,
- Fig. 10: eine Stirnansicht eines Lagerstators zur Veranschaulichung einer radial geteilten Bauweise desselben,
- Fig. 11: eine detailliertere Darstellung des Details XI in Fig. 10,
- Fig. 12: eine schematische perspektivische Darstellung einer Lagerstatorhälfte zur Veranschaulichung des Verlaufes einer darin untergebrachten Magnetspule,
- Fig. 13: Eine Seitenansicht eines Lagerstators gemäß eines Ausführungsbeispiels mit einer Verbreiterung an der Teilfuge,
- Fig. 14: eine teilweise Stirnansicht einer Lagerstatorhälfte gemäß eines Ausführungsbeispiels, und
- Fig. 15: eine Stirnansicht einer für das Beispiel von Fig. 14 einsetzbaren Klemmeinrichtung.

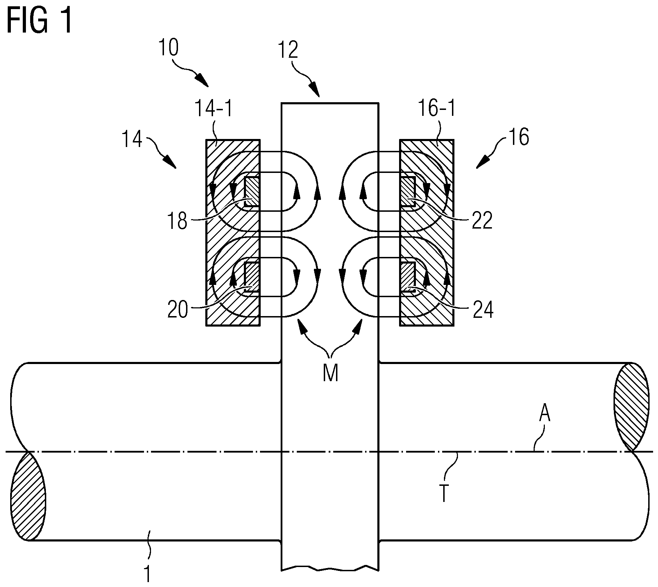

Fig. 1 zeigt ein Beispiel eines geteilten Axialmagnetlagers 10 zur axialen Lagerung eines Rotors (z. B. Turbinenläufer) 1 einer thermischen Strömungsmaschine (z. B. Dampfturbine).

Das Axialmagnetlager 10 umfasst einen Lagerrotor 12, enthaltend magnetisches Material (z. B. eine Eisen- bzw. Stahllegierung), der am Umfang des Rotors 1 angeordnet und mit diesem Rotor 1 verbunden ist, sowie zwei Lagerstatoren 14 und 16, die den Umfang des Rotors 1 umgeben und in Axialrichtung betrachtet beiderseits des Lagerrotors 12 angeordnet sind und jeweils Magnetfelderzeugungsmittel zur steuerbaren Erzeugung eines durch den Lagerrotor 12 geleiteten Magnetfeldes M enthalten.

In Fig. 1 bezeichnet A die in Axialrichtung verlaufende Drehachse des Rotors 1.

Der Lagerrotor 12 besitzt im dargestellten Ausführungsbeispiel die Form einer Scheibe (mit einer Appertur zum Durchgang des Rotors 1), die koaxial zum Rotor 1 angeordnet und fest mit diesem verbunden ist. Dies bedeutet, dass der als "Axiallagerscheibe" ausgebildete Lagerrotor 12 im Betrieb der Maschine drehfest und axial unverschiebbar mit dem Rotor 1 der Maschine verbunden ist.

Die Magnetfelderzeugungsmittel umfassen im dargestellten Beispiel in jedem der Lagerstatoren 14, 16 jeweils zwei in Umfangsrichtung verlaufende Magnetspulen 18 und 20 (des Lagerstators 14) bzw. 22 und 24 (des Lagerstators 16). Bei geteilter Bauweise der Lagerstatoren 14, 16 kann eine elektrische Kontaktierung im Bereich der Fügeflächen vorgesehen sein, mittels welcher jeweils zwei "Magnetspulenhälften" zu der jeweiligen der Magnetspulen 18 und 20 zusammengestzt werden.

Die beiden Magnetspulen eines der Lagerstatoren 14, 16, also z. B. die Magnetspulen 18 und 20, werden im dargestellten Beispiel mit (in Umfangsrichtung betrachtet) einander entgegengesetzter Stromrichtung betrieben.

In der Darstellung von Fig. 1 sind die Lagerstatoren 14, 16 geschnitten dargestellt, mit einer vertikalen und die Drehachse A enthaltenden Schnittebene. Der Einfachheit halber ist in Fig. 1 nur ein oberer Schnitt der Lagerstatoren 14, 16 dargestellt. Die Lagerstatoren 14, 16 besitzen jeweils, ähnlich wie der Lagerrotor 12, die Form eines den Rotor 10 umgebenden und koaxial zu diesem angeordneten Ringes, wobei die Lagerstatoren 14, 16, anders als der Lagerrotor 12, stationär in der betreffenden Strömungsmaschine angeordnet sind und jeweils ein Ringspalt zwischen dem Innenumfang eines Lagerstators und dem Außenumfang des Rotors 1 verbleibt.

Die beiden Lagerstatoren 14, 16 sind entlang einer den Rotor 1 durchsetzenden Teilungsebene geteilt jeweils aus zwei Lagerstatorhälften 14-1, 14-2 bzw. 16-1, 16-2 ausgebildet.

Die im dargestellten Ausführungsbeispiel für die beiden Lagerstatoren 14, 16 vorgesehene horizontale Teilungsebene ist in Fig. 1 mit T bezeichnet. Auf Grund der in Fig. 1 nach unten hin abgebrochenen Darstellung sind die jeweiligen unteren Schnitte des Lagerrotors 12 nicht erkennbar.

Eine Besonderheit des Axialmagnetlagers 10 besteht darin, dass das magnetische Material des Lagerrotors 12 in einer wirbelstromreduzierenden Weise angeordnet ist, also z. B. als (ferromagnetisches) Sintermaterial oder z. B. in Form von gestapelten (ferromagnetischen) Metallblechen.

Daraus ergibt sich vorteilhaft eine Verringerung von Wirbelstromverlusten im Lagerrotor 12, welche ansonsten insbesondere auf Grund einer "Diskontinuität" im Bereich der Teilungsebene T in größerem Ausmaß entstehen können.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

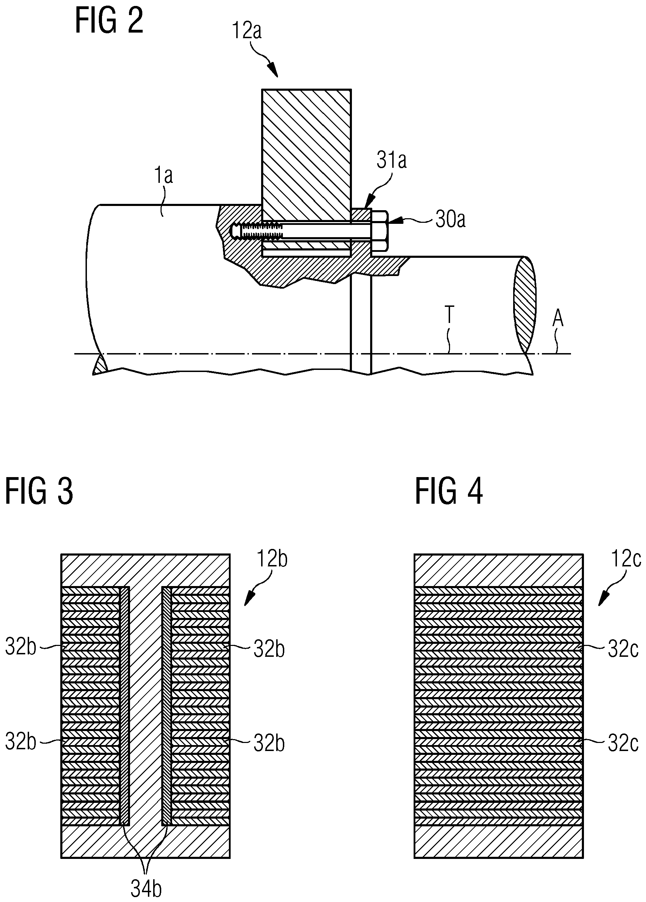

Fig. 2 veranschaulicht ein konkreteres Beispiel eines für ein Axialmagnetlager (z. B. der in Fig. 1 dargestellten Art) verwendbaren Lagerrotors 12a, der wieder drehfest und axial unverschieblich an einem Rotor 1a gehalten ist, wobei in Fig. 2 wieder nur ein oberer Schnitt des Lagerrotors 12adargestellt.

Eine Besonderheit dieses Beispiels besteht darin, dass der Lagerrotor 12a ein magnetisches Material (z. B. Eisenlegierung) enthält, welches zur Wirbelstromreduzierung gesintert ist.

Unabhängig davon veranschaulicht Fig. 2 auch konkreter eine Möglichkeit der demontierbaren Befestigung des Lagerrotors 12a mittels einer hierfür vorgesehenen in Axialrichtung sich erstreckenden Verschraubung 30a und einer Befestigungsscheibe 31a. Der Lagerrotor 12a liegt hierbei einerseits (in der Figur links) an einer radialen Schulter des Rotorumfanges an und ist andererseits (in der Figur rechts) mittels des (von der Verschraubung 30a axial durchsetzten) Befestigungsringes 31a in dieser Position gehalten. Bevorzugt ist eine Mehrzahl derartiger Verschraubungen 30a in Umfangsrichtung verteilt vorgesehen.

Die Fig. 3 und 4 veranschaulichen zwei abgewandelte Beispiele für die wirbelstromreduzierende Anordnung von magnetischem Material in einem Lagerrotor. Die Darstellung der Fig. 3 und 4 entspricht der Darstellung des Lagerrotors 12a von Fig. 2, d. h. in den Fig. 3 und 4 sind jeweils nur obere Schnitte von Lagerrotoren 12b bzw. 12c gezeigt.

Gemäß Fig. 3 sind bei dem Lagerrotor 12b Bleche 32b in Radialrichtung gestapelt in zwei axial voneinander beabstandeten "Blechpaketen" angeordnet. Jedes der Blechpakete ist wie in Fig. 3 ersichtlich in einer jeweiligen axialen Einbuchtung des Lagerrotors 12 eingefügt. 34b bezeichnet eine optional vorgesehene, jeweilige Verlötung der jeweils ein Blechpaket bildenden Bleche 32b.

Gemäß Fig. 4 liegt bei dem Lagerrotor 12c das magnetische Material wie bei dem Beispiel von Fig. 3 ebenfalls in Form von gestapelten Blechen 32c vor. Im Unterschied zu dem Beispiel gemäß Fig. 3 verlaufen die (ebenfalls in Radialrichtung gestapelten) Bleche 32c jedoch in Axialrichtung durchgehend durch den Lagerrotor 12c.

Die Lagerrotoren 12b und 12c können wie der Lagerrotor 12a beispielsweise bei einem Axialmagnetlager der in Fig. 1 dargestellten Art Verwendung finden.

Die Gestaltungsbeispiele gemäß der Fig. 2, 3 und 4 schaffen verlustarme "Rotor-Polanordnungen" zur Zusammenwirkung mit den stationär in den Lagerstatoren angeordneten Magnetfelderzeugungsmitteln. Die Zusammenwirkung erfolgt unter Überbrückung eines relativ kleinen axialen Luftspaltes. Die Rotor-Polanordnung ist eine Anordnung, die den magnetischen Fluss leitet und einen magnetischen Pol ausbilden kann. Die auf Grund der wirbelstromreduzierten Anordnungsweise des magnetischen Materials verlustarme Polanordnung ermöglicht eine verlustarme Ummagnetisierung des magnetischen Materials, wie z. B. von Blechpaketen, oder gesinterten Materialien aus ferromagnetischen Partikeln.

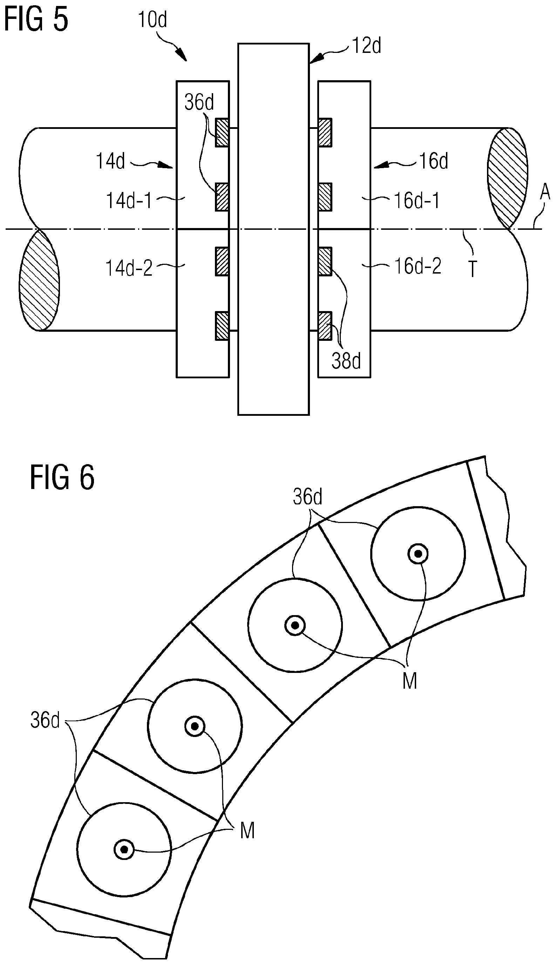

Derartige verlustarme Rotor-Polanordnungen können vorteilhaft auch mit Lagerstatoren zur Schaffung eines Axialmagnetlagers kombiniert werden, welche über den Umfang betrachtet ein veränderliches Magnetfeld erzeugen. Somit begünstigt die Wirbelstromreduzierung des Lagerrotors vorteilhaft eine konstruktiv einfachere Auslegung der zugehörigen Lagerstatoren, nämlich mit einer radialen Teilung, wobei nicht mehr zwingend ein über den Umfang gleichförmiges Magnetfeld erzeugt werden muss. Die nachfolgend noch mit Bezug auf die Fig. 5 und 6 beschriebene Konstruktion beinhaltet beispielsweise Lagerstatoren, deren erzeugtes Magnetfeld weniger homogen über den Umfang ist.

Für die Funktionssicherheit der Gestaltungsbeispiele gemäß der Fig. 3 und 4 ist es vorteilhaft, wenn die hierbei verbauten Bleche 32b bzw. 32c in axialer Richtung und radialer Richtung hinreichend gesichert werden. Axialkräfte werden im Betrieb durch die Erzeugung des Magnetfeldes erzeugt, und Radialkräfte als Fliehkräfte auf Grund der Rotation.

Für die axiale Sicherung kommt ganz allgemein z. B. ein Form-, Stoff- oder Reibschluss in Frage. Ein Formschluss kann z. B.durch ein radiales Verbohren oder Verstiften der Rotor-Polanordnung (magnetisches Material des Lagerrotors) erzielt werden, oder durch eine andere mechanische Verbindung mit dem Rotor (z. B. Wellenmutter oder Sicherungsring). Weiterhin kommen als mechanische Verbindung z. B. der Bleche untereinander Lösungen wie ein Schwalbenschanz oder eine andere Nut/Feder-Verbindung in Frage. Eine Axialsicherung kann weiterhin durch einen Stoffschluss erreicht werden, wofür z. B. ein Schweißen (z. B. Anschweißen der Polanordnung, rückwärtiges Verschweißen der Blechpakete), ein Löten (ähnlich wie Schweißen) oder ein Kleben (Verkleben des Blechpaketes, Einkleben der Polanordnung) eingesetzt werden kann. Als Verklebung taugt auch die Einbringung eines erstarrenden oder aushärtenden Stoffes, z. B. eines Isolierstoffes wie z. B. Epoxidharz. Zur axialen Sicherung ist auch ein Reibschluss denkbar, aber weniger bevorzugt. Hierbei wird das magnetische Material (z. B. Blechpaket) bzw. Rotor-Polanordnung durch Reibkräfte in Position gehalten, beispielsweise durch Aufschrumpfen, durch einen Kegelsitz, durch Schrumpfringe, durch Spannelemente oder andere eine Reibkraft bewirkende Elemente oder Anordnungen. Auch eine Kombination der vorstehend genannten Sicherungsmethoden ist möglich, beispielsweise eine stoffschlüssige Verbindung der Bleche (z. B. isolierstoffgetränktes Blechpaket) und eine formschlüssige Fixierung des Blechpaketes durch eine Wellenmutter.

Für die radiale Sicherung ist eine Umfassung durch einen äußeren Ring denkbar, welcher z. B. aufgeschrumpft oder z. B. nur aufgesteckt sein kann. Auch kann die Rotor-Polanordnung bzw. das Blechpaket in eine umlaufende (Axial)-Nut des Rotors montiert werden, oder in einer Buchse mit einem umlaufenden Vorsprung platziert werden. Denkbar ist ebenfalls, dass die Polanordnung bzw. das Blechpaket (allgemein das magnetische Material) mit Hilfe von außen liegenden Ringsegmenten gehalten wird, welche durch Zugelemente mit dem Rotor verbunden sind. Wichtig ist, dass die Polanordnung unter Fliehkraft von einem mitrotierenden Bauteil gehalten oder abgestützt wird, da die für die Polanordnung zweckmäßigerweise verwendeten Werkstoffe (z. B. Sintermaterialien bzw. Elektrobleche) oft spröde sind und nur moderaten Fliehkraftspannungen selbst standhalten. Im Falle von Blechpaketen bewirkt eine äußere Abstützung außerdem eine (gewünschte) Mindestpressung der Bleche untereinander.

Fig. 5 zeigt ein weiteres Beispiel eines Axialmagnetlagers 10d, welches in Aufbau und Funktion im Wesentlichen dem Axialmagnetlager 10 von Fig. 1 entspricht. Modifiziert sind lediglich die in Lagerstatoren 14d, 16d vorgesehenen Magnetfelderzeugungsmittel. Diese umfassen zwar ebenfalls Magnetspulen 36d (im Lagerstator 14d) bzw. 38d (im Lagerstator 16d), wobei diese Magnetspulen 36d, 38d jedoch keine in Umfangsrichtung und über den Umfang durchgehend verlaufenden Windungen besitzen, sondern als in Umfangsrichtung betrachtet relativ "kleine Magnetspulen" über den Umfang verteilt angeordnet sind und Spulenachsen besitzen, die jeweils in Axialrichtung weisen, wie es besser aus der Detailansicht gemäß Fig. 6 ersichtlich ist.

Fig. 6 veranschaulicht beispielhaft einige der Magnetspulen 36d des Lagerstators 14d. Auf Grund der axialenAusrichtung der Magnetspulenachsen wird ein Magnetfeld M erzeugt, welches z. B. wie in Fig. 6 dargestellt in Axialrichtung aus dem betreffenden Lagerstator austritt und eintritt, wobei jedoch außerhalb der Lagerstatoren 14d, 16d der magnetische Fluss auch Komponenten in Radialrichtung besitzt und wie bei dem Beispiel gemäß Fig. 1 durch den axial versetzt (zwischen den Lagerstatoren 14d, 16d) angeordneten Lagerrotor 12d geleitet und damit geschlossen wird.

Wenngleich bei den Ausgestaltungen der Magnetfelderzeugungsmittel gemäß Fig. 1 und gemäß Fig. 6 jeweils Magnetfelder M in Axialrichtung aus den Lagerstatoren ein- bzw. austreten, so ist diese Orientierung für die Funktionsweise des Axialmagnetlagers zwar besonders bevorzugt, jedoch nicht zwingend. Wesentlich ist, dass der von den Magnetfelderzeugungsmitteln ausgehende Magnetfeldfluss über den betreffenden Lagerrotor geschlossen wird, so dass durch eine an sich bekannte Regelung der Magnetfeldstärken beider Lagerstatoren die axiale Positionierung des dazwischen angeordneten (magnetisches Material enthaltenden) Lagerrotors bewerkstelligt werden kann.

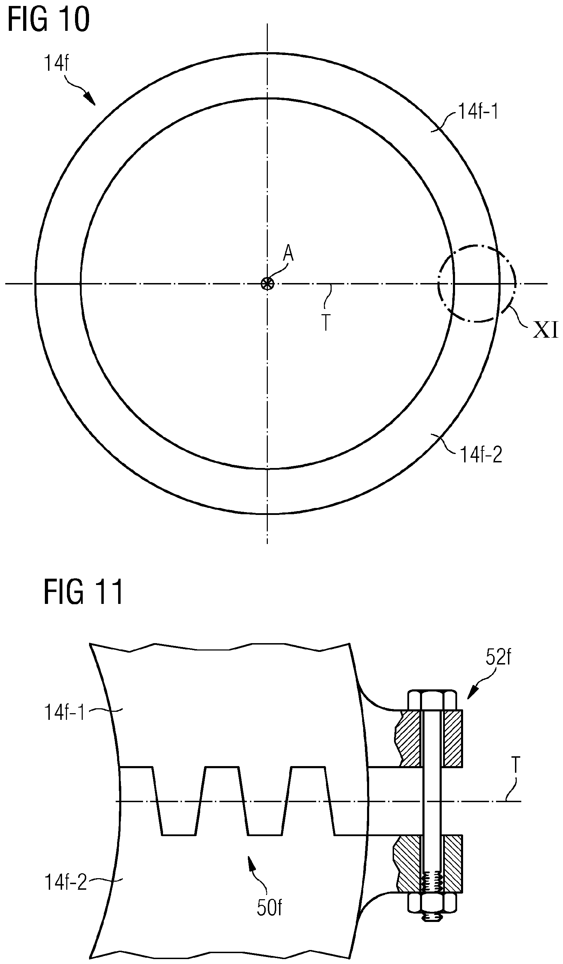

Bei dem Beispiel gemäß der Fig. 5 und 6 sollte die Stator-Magnetanordnung teilbar so gestaltet werden, dass sich die ferromagnetischen Eigenschaften jedes Lagerstators 14d, 16d über den Umfang möglichst wenig ändern. Weiterhin ist es hierbei von Vorteil, wenn die durch etwaiges magnetisches Material in den Lagerstatoren 14d, 16d geschaffenen "Stator-Polanordnungen" so gestaltet sind, dass ein rotierendes Magnetfeld, wie etwa ein durch Wirbelströme im Lagerrotor 12d verursachtes rotierendes Magnetfeld möglichst geringe Wirbelstromverluste in den Lagerstatoren hervorruft. Dazu sollten die ferromagnetischen Querschnitte der Polanordnungen der Lagerstatoren möglichst unterbrechungsfrei über den Umfang geführt werden. Dies lässt sich bevorzugt durch eine luftspaltfreie Fügefläche (in der Teilungsebene T), und alternativ oder zusätzlich z. B. durch eine Verlaschung wie bei Eisenkernen üblich, oder durch andere spaltfreie Querschnittsverbindungen realisieren (vgl. hierzu auch die Beispiele gemäß der Fig. 10 bis 15).

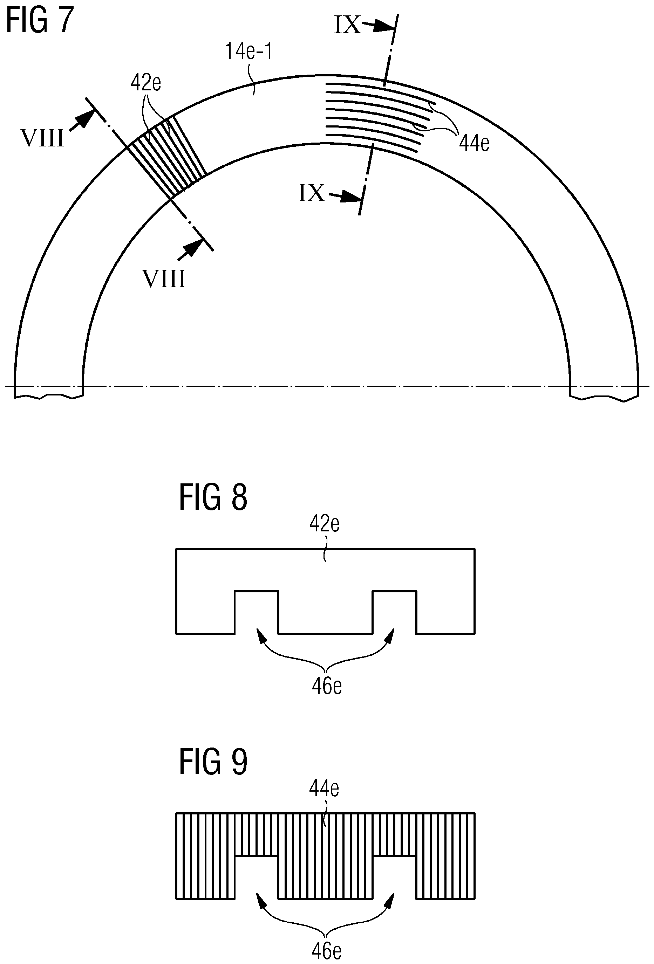

Die Fig. 7 bis 9 veranschaulichen anhand von Beispielen einen wesentlichen Teilaspekt der vorliegenden Erfindung, nämlich die Gestaltung eines Lagerstators für ein Axialmagnetlager der hier interessierenden Art, bei welcher der Lagerstator magnetisches Material enthält, welches in einer wirbelstromreduzierenden Weise angeordnet ist.

Fig. 7 zeigt beispielhaft einen halbkreisringförmigen Verlauf einer oberen Lagerstatorhälfte 14e-1, die z. B. bei Axialmagnetlagern der vorstehend bereits beschriebenen Art Verwendung finden kann.

Eine Besonderheit der Lagerstatorhälfte 14e-1 besteht darin, dass darin enthaltenes magnetisches Material zwecks Wirbelstromreduzierung in Form von gestapeltem Blechmaterial angeordnet ist. Das gleiche gilt für die in Fig. 7 nicht dargestellte zweite (untere) Lagerstatorhälfte (14e-2).

Fig. 7 ist eine schematische Kombinationsdarstellung zur Veranschaulichung zweier Ausführungsvarianten der gestapelten Blechanordnung (bzw. "Stator-Polanordnung"). So sind in einem linken Teil der Fig. 7 beispielhaft einige in Umfangsrichtung gestapelte Bleche 42e (erste Variante) und in einem rechten Teil der Fig. 7 beispielhaft einige in Radialrichtung gestapelte Bleche 44e (zweite Variante) symbolisiert.

Derartige wirbelstromreduzierende Bauweisen des Lagerstators verringern auch vorteilhaft dort etwaige Wirbelstromverluste im Betrieb des betreffenden Axialmagnetlagers.

Fig. 8 ist eine Schnittansicht längs der Linie VIII-VIII in Fig. 7 und zeigt somit die Kontur eines der Bleche 42e von Fig. 7. Diese Kontur ist im Wesentlichen rechteckig, wobei jedoch im dargestellten Beispiel Einbuchtungen 46e zur Unterbringung von in Umfangsrichtung verlaufenden Magnetwindungen der mit Bezug auf das Beispiel von Fig. 1 bereits beschriebenen Art vorgesehen sind. In diesen Einbuchtungen 46e verlaufen somit die Windungen der betreffenden Magnetspulen.

Fig. 9 ist eine Schnittansicht längs der Linie IX-IX in Fig. 7 und zeigt somit einen Stapel der Bleche 44e von Fig. 7. Auf Grund der in Radialrichtung verlaufenden Stapelrichtung der Bleche 44e besitzen diese verschiedene Konturen, um bei dieser Stapelanordnung ebenfalls die in Fig. 9 ersichtliche Anordnung zweier Einbuchtungen 46e (zur Unterbringung der genannten Magnetspulen) zu schaffen.

Die Fig. 10 bis 15 veranschaulichen anhand von Beispielen verschiedene Gestaltungen von Teilfugen zwischen zwei Lagerstatorhälften eines bei einem Axialmagnetlager der hier interessierenden Art einsetzbaren Lagerstators.

Fig. 10 zeigt ein, als solches noch nicht die Erfindung realisierendes Beispiel eines Lagerstators 14f, der in geteilter Bauweise aus zwei Lagerstatorhälften 14f-1 und 14f-2 zusammengesetzt ist. Die Axialrichtung bzw. die Drehachse des (in Fig. 10 nicht dargestellten) Rotors ist mit A bezeichnet. Die Teilungsebene ist mit T bezeichnet. Die beiden Lagerstatorhälften 14f-1, 14f-2 sind jeweils halbkreisringförmig formgestaltet.

Die Lagerstatorhälften 14f-1, 14f-2 und somit der Lagerstator 14f können jeweils in wirbelstromreduzierender Weise ausgebildet sein, wie oben bereits anhand von Beispielen beschrieben.

Nachfolgend sollen beispielhaft zur Realisierung der Erfindung einsetzbare Gestaltungsmöglichkeiten hinsichtlich der Teilfugen zwischen den betreffenden Lagerstatorhälften beschrieben werden, die im Bereich der Teilungsebene T in montiertem Zustand aneinandergefügt sind.

Ein solcher Bereich einer Teilfuge ist in Fig. 10 mit XI gekennzeichnet. Eine Gestaltungsmöglichkeit dieser Teilfuge ist in Fig. 11 detaillierter dargestellt.

Fig. 11 ist eine beispielhafte Darstellung des Details XI in Fig. 10. Eine erfindungsgemäße Besonderheit des Beispiels gemäß Fig. 11 besteht darin, dass an der dargestellten Teilfuge der beiden Lagerstatorhälften 14f-1, 14f-2 die magnetischen Materialien der beiden Lagerstatorhälften miteinander verzahnend (Verzahnung 50f) aneinandergefügt sind. In diesem Beispiel ergeben sich wie in Fig. 11 ersichtlich in Radialrichtung aneinandergereihte "Zähne" mit jeweils schräg (z. B. im Bereich von 5° bis 30° geneigt) zur Umfangsrichtung verlaufenden "Zahnflanken".

Die in Fig. 10 ersichtliche Verzahnungslinie bei 50f stellt den Verlauf der Teilfuge dar, d. h. oberhalb dieser Linie befindet sich das Material der oberen Lagerstatorhälfte 14f-1 und unterhalb dieser Linie dasjenige Material der unteren Lagerstatorhälfte 14f-2.

Die Gestaltung mit den wie dargestellt "schrägen Zahnflanken" besitzt insbesondere für den Fall einen besonderen Vorteil, in welchem die an der Teilfuge (bevorzugt ohne Abstand) aufeinandertreffenden Materialien der Lagerstatorhälften jeweils in Form von in Radialrichtung gestapelten Blechen vorliegt (vgl. die Bleche 44e in den Fig. 7 und 9). Die schrägen Flanken der Verzahnung 50f gewährleisten dann einen besonders innigen Kontakt und eine gewisse Verpressung der Bleche in Radialrichtung, was vorteilhaft zur Verringerung der in diesem Bereich grundsätzlich vorliegenden Diskontinuität (auf Grund der Teilfuge) beiträgt.

Um die beiden Lagerstatorhälften 14f-1, 14f-2 im montierten Zustand zuverlässig aneinander zu halten, ist im dargestellten Beispiel eine Verschraubung 52f an jeweils radial vorspringenden Verschraubungsflanschen der beiden Lagerstatorhälften vorgesehen.

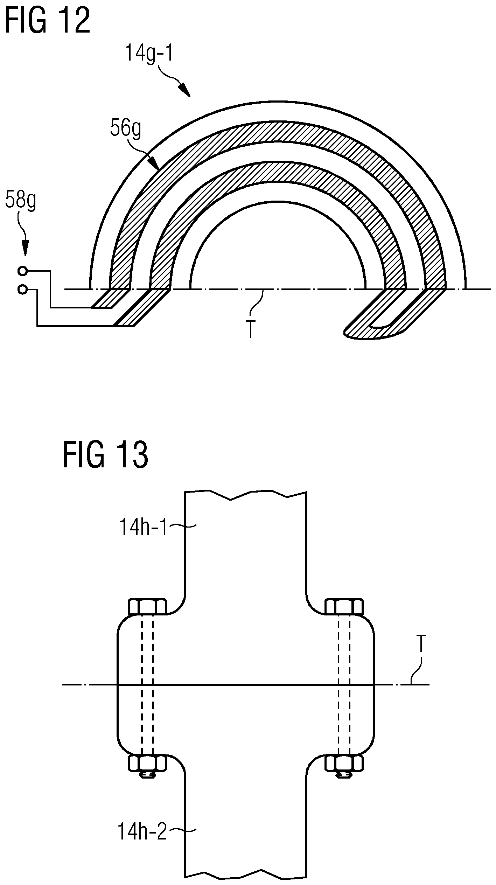

Fig. 12 zeigt ein Beispiel einer Lagerstatorhälfte 14g-1 mit einer Veranschaulichung der Ausbildung einer Magnetspule 56g im Inneren der (lediglich gestrichelt symbolisiert dargestellten) Lagerstatorhälfte 14g-1.

Die Lagerstatorhälfte 14g-1 ist halbkreisringförmig, wobei der insgesamt geschlossene Verlauf der Magnetspule 56g wie dargestellt gewissermaßen in diesen halbkreisförmigen Verlauf "hineingefaltet" ist, so dass im Wesentlichen über den gesamten Halbkreis zwei radial voneinander beabstandete Strompfade (Wicklungsleiterbündel) mit einander entgegengesetzter Stromrichtung innerhalb der Lagerstatorhälfte 14g-1 existieren. Zur Realisierung des geschlossenen Stromkreises sind die genannten Strompfade etwa im Bereich der Teilungsebene T wie in Fig. 12 ersichtlich miteinander verbunden. Die Bestromung der Magnetspule 56g erfolgt über einen in Fig. 12 symbolisierten Stromanschluss 58g.

Die dargestellte Lagerstatorhälfte 14g-1 lässt sich mit einer zweiten (nicht dargestellten) Lagerstatorhälfte (14g-2) durch Aneinanderfügung an der Teilungsebene T zu einem Lagerstatorring (14g) vervollständigen. Dieser kann dann z. B. bei einem Axialmagnetlager der oben bereits beschriebenen Art Verwendung finden.

Fig. 13 zeigt ein Beispiel für eine weitere erfindungsgemäße Fügung einer oberen Lagerstatorhälfte 14h-1 und einer unteren Lagerstatorhälfte 14h-2 im Bereich einer Teilungsebene T. Die dargestellte Besonderheit besteht darin, dass die beiden Lagerstatorhälften 14h-1, 14h-2 im Bereich der Teilfuge T eine die Kontaktfläche zwischen den Lagerstatorhälften vergrößernde Verbreiterung besitzen. Prinzipiell kann diese Verbreiterung in Axialrichtung und/oder in Radialrichtung vorgesehen sein.

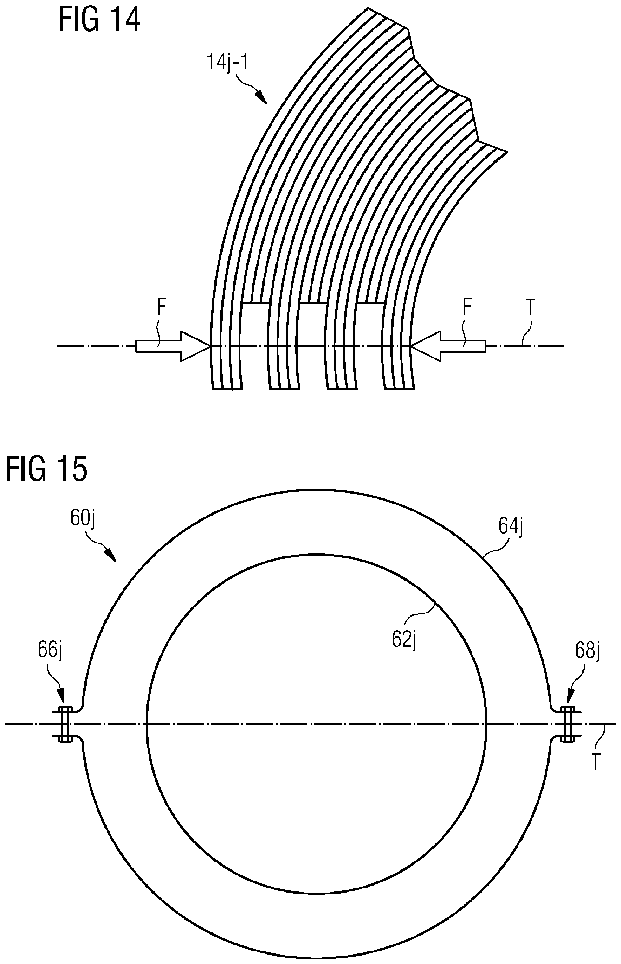

Fig. 14 zeigt ein Beispiel einer Lagerstatorhälfte 14j-1 im Bereich einer Teilungsfuge T. Die Fügefläche ist ähnlich wie bei dem Beispiel gemäß Fig. 11 nicht eben sondern korrugiert, um beim Anfügen einer in Fig. 14 nicht dargestellten zweiten Lagerstatorhälfte (14f-2) wieder eine Verzahnung von magnetischen Materialien der beiden Lagerstatorhälften zu erzielen.

Im Unterschied zu dem Beispiel gemäß Fig. 11 sind die "Zahnflanken" jedoch nicht geneigt bezüglich der Umfangsrichtung, sondern verlaufen in Umfangsrichtung. Wenn das magnetische Material der Lagerstatorhälfte 14j-1 durch in Umfangsrichtung verlaufende Bleche gebildet wird, wie dies in Fig. 14 dargestellt ist, so kann entlang der korrugierten bzw. gezahnten Fügefläche die zweite (nicht dargestellte) Lagerstatorhälfte mit entsprechender Ausgestaltung (magnetisches Material in Form eines gestapelten Blechmaterials) verzahnend angefügt werden, wobei jedoch keine Querkräfte (in Radialrichtung) allein auf Grund der Anfügung entstehen (wie dies bei dem Beispiel gemäß Fig. 11 der Fall ist).

Daher ist es für einen innigen Kontakt der einzelnen Bleche von Vorteil, wenn eine Maßnahme zur radialen Pressung der miteinander verzahnten Blechpakete getroffen wird, wie dies in Fig. 14 durch die Kraftpfeile F symbolisiert ist. Eine solche Maßnahme sei beispielhaft anhand Fig. 15 erläutert.

Fig. 15 zeigt eine Klemmeinrichtung 60j zur radialen Belastung (Klemmung) der magnetischen Materialien eines Lagerstators, der aus zwei Lagerstatorhälften der in Fig. 14 dargestellten Art zusammengesetzt ist.

Die Klemmeinrichtung 60j umfasst einen inneren Stützring 62j und einen äußeren Klemmring 64j. Der genannte, ringförmige Lagerstator ist im montierten Zustand radial zwischen den beiden Ringen 62j, 64j eingefügt und somit geklemmt. Im dargestellten Beispiel ist der äußere Klemmring 64j entlang der Teilungsebene T geteilt aus zwei Hälften ausgebildet, die im Bereich der Teilungsebene T über entsprechende Flanschverschraubungen 66j, 68j miteinander verbunden und aneinander gezogen werden.

Zusammenfassend ist eine im Wesentlichen luftspaltfreie Anlage- bzw. Statorfügefläche z. B. durch zwei Lagerstatorhälften zu erreichen, deren Berührungsflächen so hergestellt und angeordnet werden, dass sich eine feste und spaltfreie Anlage einstellt. Hierbei ist eine Vorspannung bzw. Flächenpressung an den Anlageflächen wünschenswert. Die Vorspannung kann ganz allgemein z. B. durch eine Schraub-, Bolzen- oder Keilverbindung, eine Feder oder andere geeignete Mittel erreicht werden. Die Vorspannkraft kann direkt auf die Hälften oder indirekt durch benachbarte Bauteile (z. B. Lagergehäuse- bzw. Klemmringhälften) aufgebracht werden.

Aus der Herstellung von Transformatorkernen ist eine so genannte Verlaschung von magnetischen Blechen bekannt. Dabei werden Bleche so hergestellt und aufgeschichtet, dass der Stoß in einer ersten Blechlage immer von zwei durchgehenden Blechen in den Nachbarlagen überdeckt werden; deren Stoßstellen wiederum werden durch durchgehende Bereiche der Bleche in den ihnen benachbarten Lagen überdeckt. Somit kann der magnetische Fluss, der an der Stoßstelle nicht übertragen werden kann, über die benachbarten Blechlagen geführt und bis zu deren Stoßstelle über die gemeinsame Anlagefläche (Überlappung) in die erste Blechlage zurückgeleitet werden. Im Hinblick auf teilbare Polanordnungen für Axialmagnetlager ist eine Verlaschung durch abwechselnd überstehende Bleche aus der oberen und unteren Hälfte der Polanordnung darstellbar. Um eine gute Übertragung des Flusses zwischen den Laschen zu erreichen, sind eine enge Anlage (erreichbar durch eine Vorspannung der Bleche gegeneinander, mit ähnlichen Mechanismen wie oben beschrieben) und eine gewissse Mindest-Überlappung (Überstandslänge) von großem Vorteil. Zur Sicherstellung einer zuverlässigen Montage sollten die Bleche zumindest teilweise mit einer Anfasung oder einer anderen Montagehilfe ausgestattet sein. Weiterhin sollten die Eingriffsstellen der Laschen bei der Montage einsehbar und zugänglich sein.

Andere spaltfreie Querschnittsverbindungen zeichnen sich dadurch aus, dass sie die Übertragung des magnetischen Flusses über Anlageflächen gewährleisten, welche gegenüber einer ebenen Anlagefläche wesentlich vergrößert sind. Damit wird in der Teilungsebene ein großer Querschnitt zur Leitung des magnetischen Flusses erreicht, bei gleichzeitig großen Übertragungsflächen für die magnetische Verbindung der Bauteile. Weiterhin sollte durch Herstellung und Anordnung der Anlageflächen ein enger Kontakt gewährleistet werden. Derartige spaltfreie Querschnittsverbindungen sind beispielsweise als Verzahnungen, Kegel-(Steck)-Verbindungen oder Nut-Verbindungen von gesinterten Bauteilen bzw. Blechpaketen der Polanordnung denkbar.

## Patentansprüche

1. Geteiltes Axialmagnetlager zur Lagerung eines Rotors (1) einer thermischen Strömungsmaschine, umfassend
- einen Lagerrotor (12), enthaltend magnetisches Material, der am Umfang des Rotors (1) angeordnet und mit diesem verbunden ist,
- zwei Lagerstatoren (14, 16), die den Umfang des Rotors (1) umgeben und in Axialrichtung betrachtet beiderseits des Lagerrotors (12) angeordnet sind und jeweils Magnetfelderzeugungsmittel zur steuerbaren Erzeugung eines durch den Lagerrotor (12) geleiteten Magnetfeldes (M) enthalten,
wobei wenigstens einer der Lagerstatoren (14, 16) entlang einer den Rotor (1) durchsetzenden Teilungsebene (T) geteilt aus zwei Lagerstatorhälften (14-1, 14-2, 16-1, 16-2) ausgebildet ist,
**dadurch gekennzeichnet, dass** wenigstens einer der Lagerstatoren (14, 16) magnetisches Material enthält, welches in einer wirbelstromreduzierenden Weise angeordnet ist,
und dass an einer Teilfuge der beiden Lagerstatorhälften (14-1, 14-2) die magnetischen Materialien der beiden Lagerstatorhälften (14f-1, 14f-2) miteinander verzahnend aneinandergefügt sind und/oder die beiden Lagerstatorhälften im Bereich einer Teilfuge der beiden Lagerstatorhälften (14h-1, 14h-2) eine deren Kontaktfläche vergrößernde Verbreiterung besitzen.

2. Geteiltes Axialmagnetlager nach Anspruch 1, wobei das magnetische Material des Lagerstators (14, 16) ein gestapeltes Blechmaterial (42; 44) umfasst.

3. Geteiltes Axialmagnetlager nach Anspruch 2, wobei die Stapelrichtung in Umfangsrichtung verläuft.

4. Geteiltes Axialmagnetlager nach Anspruch 2, wobei die Stapelrichtung in Radialrichtung verläuft.

5. Geteiltes Axialmagnetlager nach einem der vorangehenden Ansprüche, wobei das magnetische Material des Lagerrotors (12) in einer wirbelstromreduzierenden Weise angeordnet ist.

6. Geteiltes Axialmagnetlager nach Anspruch 5, wobei das magnetische Material des Lagerrotors (12) ein Sintermaterial umfasst.

7. Geteiltes Axialmagnetlager nach Anspruch 5 oder 6, wobei das magnetische Material des Lagerrotors (12) ein gestapeltes Blechmaterial (32) umfasst.

8. Thermische Strömungsmaschine, insbesondere Expansionsturbine, umfassend ein Gehäuse und einen darin gelagerten Rotor (1), **dadurch gekennzeichnet, dass** für die Drehlagerung des Rotors (1) wenigstens ein geteiltes Axialmagnetlager (10) nach einem der vorangehenden Ansprüche vorgesehen ist.

## Claims

1. Split axial magnetic bearing for the mounting of a rotor (1) of a thermal turbomachine, comprising
- a bearing rotor (12) comprising magnetic material, which bearing rotor is arranged on the circumference of, and connected to, the rotor (1),
- two bearing stators (14, 16), which surround the circumference of the rotor (1) and which, as viewed in an axial direction, are arranged to both sides of the bearing rotor (12) and which each comprise magnetic-field-generating means for the controllable generation of a magnetic field (M) conducted through the bearing rotor (12),
wherein at least one of the bearing stators (14, 16) is formed, so as to be divided along a parting plane (T) extending through the rotor (1), from two bearing stator halves (14-1, 14-2, 16-1, 16-2),
**characterized in that** at least one of the bearing stators (14, 16) comprises magnetic material which is arranged in such a manner as to reduce eddy currents,
and **in that**, at a parting joint of the two bearing stator halves (14-1, 14-2), the magnetic materials of the two bearing stator halves (14f-1, 14f-2) are joined together in an intermeshing manner, and/or the two bearing stator halves have, in the region of a parting joint of the two bearing stator halves (14h-1, 14h-2), a widening which increases the contact area thereof.

2. Split axial magnetic bearing according to Claim 1, wherein the magnetic material of the bearing stator (14, 16) comprises a stacked lamination material (42; 44).

3. Split axial magnetic bearing according to Claim 2, wherein the stacking direction runs in a circumferential direction.

4. Split axial magnetic bearing according to Claim 2, wherein the stacking direction runs in a radial direction.

5. Split axial magnetic bearing according to any of the preceding claims, wherein the magnetic material of the bearing rotor (12) is arranged in such a manner as to reduce eddy currents.

6. Split axial magnetic bearing according to Claim 5, wherein the magnetic material of the bearing rotor (12) comprises a sintered material.

7. Split axial magnetic bearing according to Claim 5 or 6, wherein the magnetic material of the bearing rotor (12) comprises a stacked lamination material (32).

8. Thermal turbomachine, in particular expansion turbine, comprising a housing and a rotor (1) mounted in said housing, **characterized in that** at least one split axial magnetic bearing (10) according to any of the preceding claims is provided for the rotational mounting of the rotor (1).

## Revendications

1. Palier magnétique axial de type à fente pour supporter un rotor (1) d'une turbomachine thermique, comprenant
- un rotor de palier (12) comprenant un matériau magnétique, qui est disposé sur le pourtour du rotor (1) et relié à celui-ci,
- deux stators de palier (14, 16) qui entourent le pourtour du rotor (1) et sont disposés des deux côtés du rotor de palier (12) vu dans le sens axial et contiennent respectivement des moyens de production de champ magnétique pour générer de manière pouvant être commandée, un champ magnétique (M) dirigé à travers le rotor de palier (12),
dans lequel au moins un des stators de palier (14, 16) est formé divisé en deux moitiés de stator de palier (14-1, 14-2, 16-1, 16-2) le long d'un plan de séparation (T) traversant le rotor (1),
**caractérisé en ce qu'**au moins un des stators de palier (14, 16) contient un matériau magnétique qui est disposé de manière à réduire le courant tourbillonnaire,
et que, sur une jointure partielle des deux moitiés de stator de palier (14-1, 14-2), les matériaux magnétiques des deux moitiés de stator de palier (14f-1, 14f-2) sont aboutis en s'engrenant l'une avec l'autre et/ou que les deux moitiés de stator de palier possèdent au niveau d'une jointure partielle des deux moitiés de stator de palier (14h-1, 14h-2), un élargissement agrandissant leur surface de contact.

2. Palier magnétique axial de type à fente selon la revendication 1, dans lequel le matériau magnétique du stator de palier (14, 16) comprend un matériau de tôle (42 ; 44) superposé.

3. Palier magnétique axial de type à fente selon la revendication 2, dans lequel le sens de superposition passe dans le sens périphérique.

4. Palier magnétique axial de type à fente selon la revendication 2, dans lequel le sens de superposition passe dans le sens radial.

5. Palier magnétique axial de type à fente selon l'une des revendications précédentes, dans lequel le matériau magnétique du rotor de palier (12) est disposé de manière à réduire le courant tourbillonnaire.

6. Palier magnétique axial de type à fente selon la revendication 5, dans lequel le matériau magnétique du rotor de palier (12) comprend un matériau fritté.

7. Palier magnétique axial de type à fente selon la revendication 5 ou 6, dans lequel le matériau magnétique du rotor de palier (12) comprend un matériau de tôle (32) superposé.

8. Turbomachine thermique, en particulier turbine à expansion, comprenant un carter et un rotor (1) supporté dedans, **caractérisée en ce que** pour supporter en rotation le rotor (1), il est prévu au moins un palier magnétique axial de type fente (10) selon l'une des revendications précédentes.
